# EUROPEAN PATENT APPLICATION

(11) **EP 2 830 322 A1**
(43) Date of publication of application: **28.01.2015**
(21) Application number: 14183637.9
(22) Date of filing: 27.07.2010
(51) Int. Cl.: H04N 21/6587, H04N 21/858, H04N 21/2387, H04N 7/173

(54) **METHOD, TERMINAL AND SERVER FOR IMPLEMENTING TRICKPLAY**

(30) Priority: 09.11.2009 CN 200910110045
(62) Divisional of application: 10827840.9
(71) Applicant: Huawei Technologies Co., Ltd., Shenzhen, Guangdong 518129 (CN)
(72) Inventor: Liu, Guangyuan, shenzhen (CN); Shi, Teng, shenzhen (CN); Yuan, Weizhong, shenzhen (CN); Zhang, Renzhou, shenzhen (CN); Zhang, Yuanyuan, shenzhen (CN); Tian, Yonghui, shenzhen (CN); Yue, Peiyu, shenzhen (CN); Zhang, Chuxiong, shenzhen (CN)
(74) Representative: Kreuz, Georg Maria

(57) **Abstract**

A method for implementing fast playback is provided, which comprises: receiving a fast playback request sent by a client, where the fast playback request comprises a Uniform Resource Locator (URL) corresponding to content of a media file with a specified multiple of regular playback rate by the client, and the specified multiple of regular playback rate is determined by the client according to obtained media presentation description; and obtaining a content segment corresponding to the media file with the specified multiple of regular playback rate according to the URL, and sending a fast playback response to the client, where the fast playback response comprises the content segment corresponding to the media file with the specified multiple of regular playback rate. Therefore, fast online playing is implemented, and user experience is improved at the same time.

## Description

### FIELD OF THE INVENTION

The present invention relates to the field of communications technologies, and in particular, to a method, a terminal, and a server for implementing fast playback.

### BACKGROUND OF THE INVENTION

Users obtain and play multimedia content through a terminal device in many modes. Typical modes are playing files after downloading the files to a local disk through Hyper Text Transport Protocol (HTTP) or Peer to Peer (P2P) networking, playing and controlling streaming media through a conventional Real Time Protocol (RTP)/Real Time Control Protocol (RTCP) and a conventional Real Time Streaming Protocol (RTSP) for data transmission, online live broadcasting/on-demand broadcasting in a P2P streaming media manner, and HTTP progressive downloading.

During playing, the user may have many trick playing requirements on the playing modes, for example, operations such as fast-forward playing, fast-rewind playing, slow playing, slow replaying, sliding or dragging on a file being played. Basically, for files that are played after being downloaded to a local disk through the HTTP file downloading or P2P file downloading , the above various requirements on playing can all be implemented. However, the HTTP file downloading is inconvenient for the user. The HTTP file downloading requires that a requested media file should be downloaded to the local disk before being played, which is not applicable to the existing multimedia file that is usually with a size of hundreds of Megabytes, or even several Gigabits. In an existing network condition, the user needs to wait for a long time to finish the whole downloading process.

The online streaming service is a very popular broadcasting mode among users, since the online streaming service can be implemented without finishing downloading. However, the live broadcasting in the prior art fails to meet the playing requirements such as fast-forward playing or fast-rewind playing. For instance, in an application scenario, a user is watching a program of National Day military parade on an online streaming service website. The user is interested in troops of women soldiers, but does not know in which time period of the program the troops of women soldiers appear. Therefore, the user intends to perform fast playback so as to scan the program to determine the time period when the troops of women soldiers appear, and then perform normal playing to watch the troops of women soldiers. However, in the online streaming service of the prior art, the program being played can only be dragged, which fails to meet the fast playback requirement of the user.

### SUMMARY OF THE INVENTION

Accordingly, in order to implement fast-forward playing or fast-rewind playing during an online streaming service process, embodiments of the present invention provide a method, a terminal, and a server for fast-forward playing or fast-rewind playing.

A method for implementing fast playback provided in an embodiment of the present invention comprises:
sending a media presentation description of a media file to a client, wherein the media presentation description comprises an Identifier (ID) which indicate the supported fast playback type, a supported multiple of regular playback rate and a Uniform Resource Locator (URL) of a content segment of the media file corresponding to supported multiple of regular playback rate of fast playback, wherein the fast playback type comprises fast-forward playing and/or fast-rewind playing;
receiving a fast playback request sent by the client, where the fast playback request comprises a URL corresponding to a content segment of the media file with a specified multiple of regular playback rate by the client which is determined by the client; and obtaining the content segment corresponding to the fast playback reqeust, and sending a fast playback response to the client, where the fast playback response comprises the content segment corresponding to the media file with the specified multiple of regular playback rate.

Meanwhile, a method for implementing fast playbackfast playback provided in an embodiment of the present invention comprises:
obtaining media presentation description of a media file from a server, where the media presentation description comprises a supported multiple of regular playback rate, an Identifier (ID) which indicate the supported fast playback type and a Uniform Resource Locator (URL) of a content segment of the media file corresponding to supported multiple of regular playback rate of fast playback, wherein the fast playback type comprises fast-forward playing and/or fast-rewind playing; specifying a multiple of regular playback rate according to the media presentation description, and sending a fast playback request to the server, where the fast playback request comprises a URL corresponding to the content segment of the media file with the specified multiple of regular playback rate; and receiving a fast playback response sent by the server, where the fast playback response comprises a content segment corresponding to the media file with the specified multiple of regular playback rate and implementing fast playback of the media file according to the content segment.

Meanwhile, a server for implementing fast playback provided in an embodiment of the present invention comprises:
a media presentation description sending unit, configured to send a media presentation description of a media file to a client, wherein the media presentation description comprises an Identifier (ID) which indicate the supported fast playback type, a supported multiple of regular playback rate and a Uniform Resource Locator (URL) of a content segment of the media file corresponding to supported multiple of regular playback rate of fast playback, wherein the fast playback type comprises fast-forward playing and/or fast-rewind playing;
a fast playback request receiving unit, configured to receive a fast playback request sent by the client, where the fast playback request comprises a URL corresponding to a content segment of the media file with a specified multiple of regular playback rate by the client which is determined by the client; and a fast playback response sending unit, configured to obtain the content segment corresponding to the fast playback request, and send a fast playback response to the client, where the fast playback response comprises the content segment corresponding to the media file with the specified multiple of regular playback rate.

Meanwhile, a terminal for implementing fast playback provided in an embodiment of the present invention comprises: a media presentation description obtaining unit, configured to obtain media presentation description of a media file from a server, where the media presentation description comprises a supported multiple of regular playback rate, an Identifier (ID) which indicate the supported fast playback type and a Uniform Resource Locator (URL) of a content segment of the media file corresponding to supported multiple of regular playback rate of fast playback, wherein the fast playback type comprises fast-forward playing and/or fast-rewind playing; a fast playback request sending unit, configured to specify a multiple of regular playback rate according to the media presentation description, and send a fast playback request to the server, where the fast playback request comprises a URL corresponding to the content segment of the media file with the specified multiple of regular playback rate; and a fast playback response receiving unit, configured to receive a fast playback response sent by the server, where the fast playback response comprises a content segment corresponding to the media file with the specified multiple of regular playback rate, and implement fast playback of the media file according to the content segment.

In the embodiments of the present invention, the client sends the fast playback request to the server according to the supported multiple of regular playback rate comprised in the media presentation description of the media file. The server sends the fast playback response to the client, where the fast playback response carries the content segment corresponding to the media file with the specified multiple of regular playback rate. Therefore, the client may implement the required fast playback of the online streaming service according to each content segment, and improve user experience at the same time.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for implementing fast playback of a media file according to an embodiment of the present invention;
FIG. 2 is a flow chart of another method for implementing fast playback of a media file according to an embodiment of the present invention;
FIG. 3 is a flow chart of another method for implementing fast playback of a media file according to an embodiment of the present invention;
FIG. 4 is a flow chart of another method for implementing fast playback of a media file according to an embodiment of the present invention;
FIG. 5 is a schematic diagram of a content segment of a media file according to an embodiment of the present invention;
FIG. 6 is a flow chart of another method for implementing fast playback of a media file according to an embodiment of the present invention;
FIG. 7 is a schematic diagram of another content segment of a media file according to an embodiment of the present invention;
FIG. 8 is a flow chart of another method for implementing fast playback of a media file according to an embodiment of the present invention;
FIG. 9 is a schematic diagram of another content segment of a media file according to an embodiment of the present invention;
FIG. 10 is a flow chart of another method for implementing fast playback of a media file according to an embodiment of the present invention;
FIG. 11 is a schematic diagram of another content segment of a media file according to an embodiment of the present invention;
FIG. 12 is a flow chart of another method for implementing fast playback of a media file according to an embodiment of the present invention;
FIG. 13 is a schematic structure diagram of a server for implementing fast playback according to an embodiment of the present invention;
FIG. 14 is a schematic structure diagram of another server for implementing fast playback according to an embodiment of the present invention; and
FIG. 15 is a schematic structure diagram of a terminal for implementing fast playback according to an embodiment of the present invention.

### DETAILED DESCRIPTION OF THE EMBODIMENTS

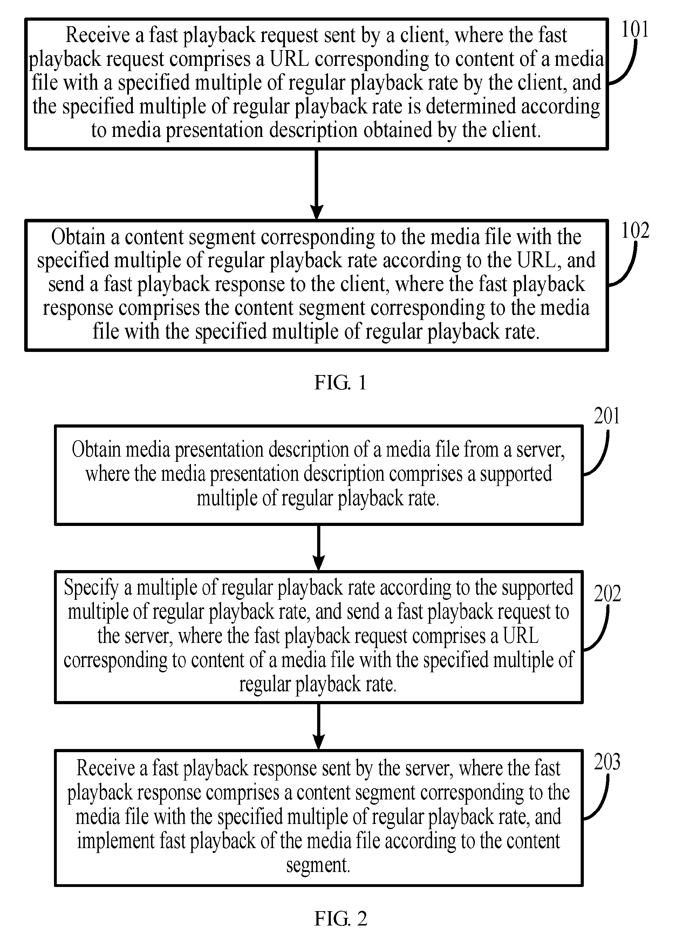

A method for multimedia fast-forward playing or fast-rewind playing of the present invention is an enhanced method based on an HTTP Streaming protocol of a streaming content transmission mode over HTTP. FIG. 1 is a method for a client implementing fast-forward playing or fast-rewind playing according to an embodiment of the present invention, where the method comprises the following steps.

Step 101: Receive a fast playback request sent by a client, where the fast playback request comprises a URL corresponding to content of a media file with a specified multiple of regular playback rate by the client, and the specified multiple of regular playback rate is determined according to media presentation description obtained by the client.

Step 102: Obtain a content segment corresponding to the media file with the specified multiple of regular playback rate according to the URL, and send a fast playback response to the client, where the fast playback response comprises the content segment corresponding to the media file with the specified multiple of regular playback rate.

In the embodiment of the present invention, the client sends the fast playback request to the server according to a supported multiple of regular playback rate comprised in the media presentation description of the media file. The server sends the fast playback response to the client, where the fast playback response carries the content segment corresponding to the media file with the specified multiple of regular playback rate. Therefore, the client may implement the required fast playback of the online streaming service according to each content segment, and improve user experience at the same time.

FIG. 2 is a method for a client implementing fast-forward playing or fast-rewind playing, where the method comprises the following steps.

Step 201: Obtain media presentation description of a media file from a server, where the media presentation description comprises a supported multiple of regular playback rate.

Step 202: Specify a multiple of regular playback rate according to the supported multiple of regular playback rate, and send a fast playback request to the server, where the fast playback request comprises a URL corresponding to content of a media file with the specified multiple of regular playback rate.

Step 203: Receive a fast playback response sent by the server, where the fast playback response comprises a content segment corresponding to the media file with the specified multiple of regular playback rate, and implement fast playback of the media file according to the content segment.

In the embodiment of the present invention, the client sends the fast playback request to the server according to the supported multiple of regular playback rate comprised in the media presentation description of the media file. The server sends the fast playback response to the client, where the fast playback response carries the content segment corresponding to the media file with the specified multiple of regular playback rate. Therefore, the client may implement the required fast playback of the online streaming service according to each content segment, and improve user experience at the same time.

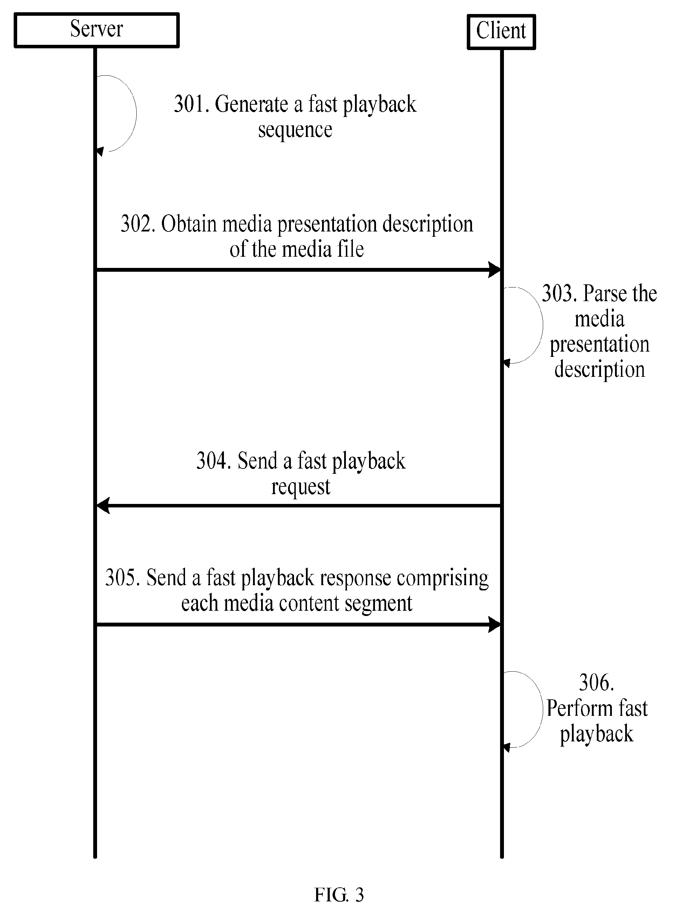

FIG. 3 is a method for implementing fast playback of a media file according to an embodiment of the present invention, where the method comprises the following steps.

Step 301: An HTTP Streaming server generates a fast playback sequence for a media file to be played in advance. Proper I frames are extracted from a regular playback rate sequence of the media file to establish an I frame index, and in combination with segments, the I frame index is encapsulated into a file meeting an HTTP Streaming requirement. The specific process is as follows: establishing in advance a pure I frame sequence for each multiple of regular playback rate of fast playback in a regular playback rate file of the media file, where the pure I frame sequence may be an actual I frame sequence or a virtual I frame sequence, namely, an I frame index file; and extracting the I frames when required.

Optionally, the HTTP Streaming server may also segment the fast playback sequence according to segment information of HTTP Streaming configuration of the file. The segment information may comprise: the number of segments of the file, a coding format of the file, and time of each segment of the file. Then, the server segments the fast playback sequence according to the segment information of the HTTP Streaming configuration of the file.

Optionally, the HTTP Streaming server may also encapsulate the segmented fast playback sequence into a file meeting the HTTP Streaming requirement, that is, meeting HTTP Streaming segmentation and file encapsulation characteristics. For example, the file after being encapsulated through the above method can meet a 3rd Generation Partnership Project (3GPP) standard format, or the file after being encapsulated through the above method can meet a Microsoft ISM file format, namely, a specific ISO file format capable of supporting a fragment form.

Through the above process, the HTTP Streaming server generates the fast playback sequence of the media file. At the same time, the HTTP Streaming server generates the media presentation description of the media file. The media presentation description comprises fast playback description, a supported multiple of regular playback rate of fast playback and different URLs corresponding to fast-forward playing or fast-rewind playing sequences with different multiples of regular playback rate.

Optionally, the media presentation description further comprises a URL corresponding to the fast playback sequence with a different multiple of regular playback rate. The URL may be directly linked to each segment of fast-forward playing or fast-rewind playing, or linked to a set of several segments of fast-forward playing or fast-rewind playing. For example, a segment set is downloaded directly through a URL of the segment set, or a URL of each segment in the set is obtained through the URL of the segment set.

Step 302: Before fast-forward playing or fast-rewind playing is requested, an HTTP Streaming client may obtain media presentation description from the server in multiple manners.

Step 303: The HTTP Streaming client parses the obtained media presentation description to obtain a fast playback Identifier (ID) of the media file and the supported multiple of regular playback rate of fast playback.

Step 304: After acquiring that the media file is capable of supporting fast playback and the supported multiple of regular playback rate of fast playback according to the media presentation description the HTTP Streaming client obtains a URL of a content segment corresponding to a specified multiple of regular playback rate of fast playback, and sends a fast playback request to the HTTP Streaming server according to the URL, where the fast playback request comprises the URL of the content segment corresponding to the specified multiple of regular playback rate of fast playback.

If the media presentation description does not comprise the URL of the content segment corresponding to each multiple of regular playback rate of fast playback, the client further needs to request the server for the URL of the content segment corresponding to each multiple of regular playback rate of fast playback.

Step 305: The HTTP Streaming server obtains each content segment according to the URL of the content segment corresponding to the specified multiple of regular playback rate of fast playback, and sends a fast playback response comprising each content segment to the client.

Step 306: The client implements fast playback of the content according to each content segment. In the embodiment of the present invention, the client sends the fast playback request to the server according to the supported multiple of regular playback rate comprised in the media presentation description of the media file. The server sends the fast playback response to the client, where the fast playback response carries the content segments corresponding to the media file with the specified multiple of regular playback rate. Therefore, the client may implement the required fast playback of the online streaming service according to each content segment, and improve user experience at the same time.

Five different methods for fast playback are listed below. The five methods may have a same application scenario: all media files support fast playback, and the fast playback may be fast-forward playing or fast-rewind playing. Supported multiples of regular playback rate of fast-forward playing are 2X, 4X, and 8X; and supported multiples of regular playback rate of fast-rewind playing are -2X, -4X, and -8X, where X represents regular playback rate, and "-" represents rewinding. A content source is a 10-minute animated film, where a video code is a Moving Picture Experts Group-2 (MPEG-2) code, and an audio code is a Moving Picture Experts Group Audio Layer-3 (MP3) code.

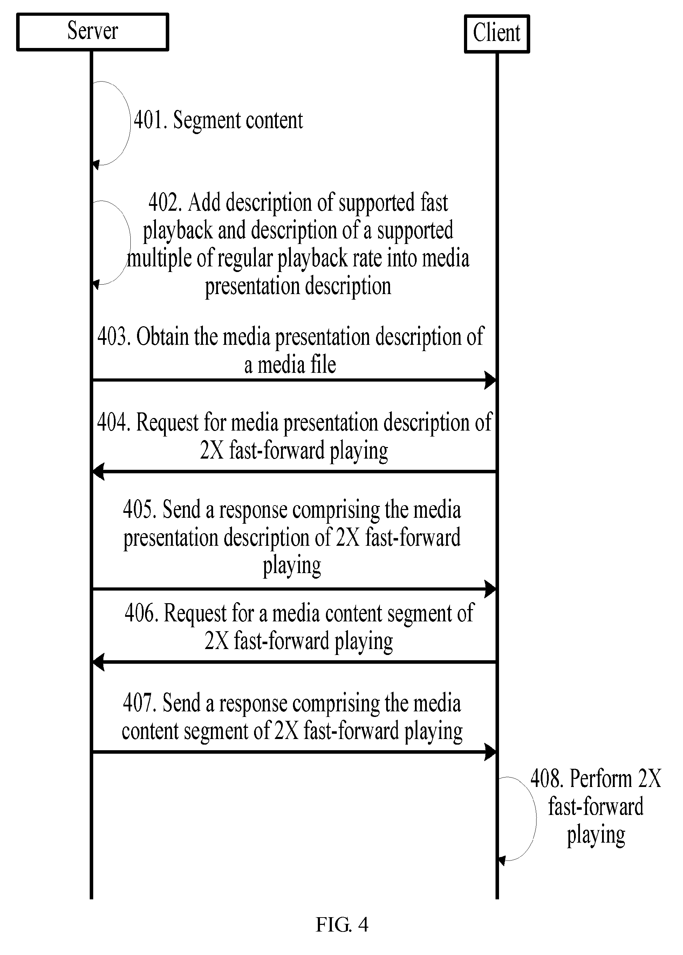

FIG. 4 is a method for implementing fast playback of a media file according to an embodiment of the present invention, where the method comprises the following steps.

Step 401: An HTTP Streaming server segments content to be fast played for a multimedia file.

For each multiple of regular playback rate of fast playback, the HTTP Streaming server needs to generate a corresponding fast playback sequence in advance. The fast playback sequence is generated from a regular playback rate sequence of the media file. For example, in a 2X fast-forward playing video sequence, I frames are extracted from an MPEG-2 code video at an interval of double of regular playback rate, and are re-coded in an original video coding format (MPEG-2) according to a video description parameter obtained from the MPEG-2 code video with the regular playback rate, thereby generating a video sequence only containing I frames at double of regular playback rate of fast-forward playing. Other modes for obtaining rate sequences are similar, that is, extracting I frames from an original video at an interval of N times of regular playback rate for re-coding, so as to obtain a video sequence operated at an interval of N times of regular playback rate. In a fast-rewind playing sequence, I frames are arranged in a reverse order.

Each fast playback sequence is segmented in a same way as the sequence with the same regular playback rate, and the segments are encapsulated in a 3GPP progressive file downloading format based on an ISO fragment format. In this manner, each file segment of fast playback can be decoded independently for playing. Since the segment of the fast playback sequence is the same as that of a regular playing sequence, a smooth switch can be performed between a fast playback operation and regular playing at a same segment time point. A specific segmentation method is described as follows.

The segmentation is performed based on a 10-second time interval. An audio and a video are segmented and encapsulated separately. In this manner, a 10-minute program is divided into 60 video segments with the regular playback rate and 60 audio segments with the regular playback rate.

When a Digital Versatile Disc (DVD) player or a video recorder in the prior art performs the fast playback operation, since the fast palyout of the audio causes a change in pitch, generally the fast playback operation is performed on the video only, and the audio is processed in a mute manner. Therefore, the fast playback operation herein is merely a process based on the ISO fragment format for the video.

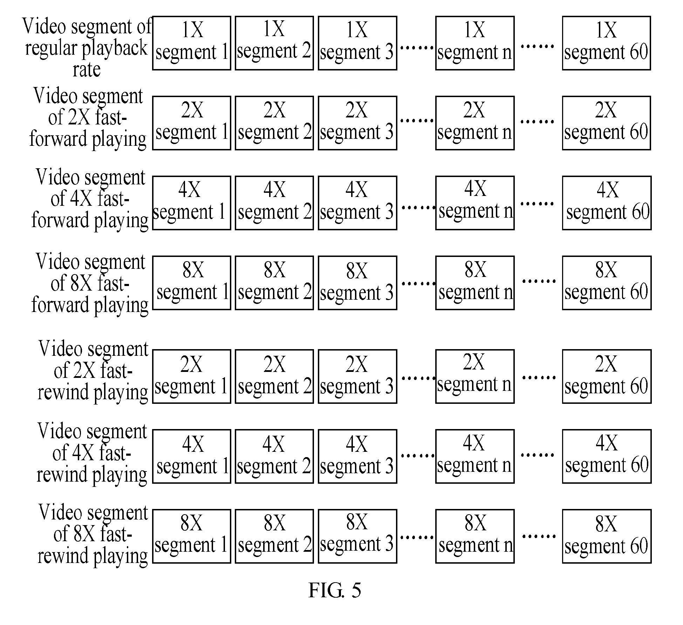

After encapsulating the segmented file according to the above mode, 60 fast-forward playing video segments with double of regular playback rate, 60 fast-forward playing video segments with quadruple of regular playback rate, 60 fast-forward playing video segments with octuple of regular playback rate, 60 fast-rewind playing video segments with double of regular playback rate, 60 fast-rewind playing video segments with quadruple of regular playback rate, and 60 fast-rewind playing video segments with octuple of regular playback rate can be obtained, as shown in FIG. 5.

Step 402: The HTTP Streaming server adds description of supporting fast playback and description of a supported multiple of regular playback rate into media presentation description of a media file.

The description of fast playback may be an ID indicating whether the fast playback is supported and an ID for supporting a fast playback type. For example, the ID for supporting a fast-forward playing type is F, and the ID for supporting a fast-rewind playing type is S.

For instance, content of the media presentation description is as follows, where an underlined part is the added description of the fast-forward playing or fast-rewind playing.
Version="1"
Duration="5965419999"
Chunks="60"
Type="video",Code="MPEG-2",Bitrate=" 1250000",Width="640",Height="480",inde xURL=HTTP://www.abc.com/sample1/video1X/index.des
Type="audio",Code="MP3",Bitrate="64000",indexURL=HTTP://www.abc.com/sam ple1/audio1X/index.des
Type="fast-forward",Code="MPEG-2",Bitrate="480000",scale=2,indexURL=HTTP:/ /www.abc.com/sample1/ff2X/index.des
Type="fast-forward",Code="MPEG-2",Bitrate="240000",scale=4,indexURL=HTTP:/ /www.abc.com/sample1/ff4X/index.des
Type="fast-forward",Code="MPEG-2",Bitrate=" 120000",scale=8,indexURL=HTTP:/ /www.abc.com/sample1/ff8X/index.des
Type="fast-rewind",Code="MPEG-2",Bitrate="480000",scale=-2,indexURL=HTTP:/ /www.abc.com/sample1/fr2X/index.des
Type="fast-rewind",Code="MPEG-2",Bitrate="240000",scale=-4,indexURL=HTTP:/ /www.abc.com/sample 1/fr4X/index.des
Type="fast-rewind",Code="MPEG-2",Bitrate=" 120000",scale=-8,indexURL=HTTP:/ /www.abc.com/sample1/fr8X/index.des

The indexURL above is a media description link. A client may obtain description of a URL of a specific segment according to the link. Definitely, the URL description of the specific segment may also be provided directly in the same media presentation description. The fast-forward playing with double of regular playback rate is taken as an example below. The content of each segment of HTTP://www.abc.com/sample1/ff4X/index.des is as follows:
Version="1"
mediaID=FF2X
TotalDuration="5965419999"
Duration=" 100000000"
Chunks="60"
Number=1,Duration="100000000",URL=HTTP://www.abc.com/sample1/ff2X/segm ent_1.3GP
Number=2,Duration="100000000",URL=HTTP://www.abc.com/sample1/ff2X/segm ent_2.3GP
...
Number=59,Duration=" 100000000",URL=HTTP://www.abc.com/sample1/ff2X/seg ment_59.3GP
Number=60,Duration="65419999",URL=HTTP://www.abc.com/sample1/ff2X/segm ent_60.3GP

Step 403: The client obtains the media presentation description of the media file.

The client may obtain the media presentation description of the media file through multiple modes, for example, through a web page or an Electronic Program Guide (EPG). The client parses the media presentation description, and may obtain a media presentation duration from the media presentation description, the fast-forward playing or fast-rewind playing being supported, and the supported multiple of regular playback rate.

Optionally, the media presentation description may further comprise a URL corresponding to a content segment of the media file with each multiple of regular playback rate.

Step 404: The client selects a 2X fast-forward playing operation. When the 2X fast-forward playing operation is clicked and performed, the client obtains a URL link corresponding to the media presentation description of 2X fast-forward playing through an indexURL corresponding to the 2X fast-forward playing, and initiates an HTTP get request according to the URL link, so as to request for obtaining the media presentation description of 2X fast-forward playing from a URL indicated by the indexURL.

Step 405: The server sends an HTTP response to the client to reply to the client with the media presentation description of 2X fast forwarding, where the HTTP response carries the media presentation description corresponding to the 2X fast-forward playing. The media presentation description corresponding to the 2X fast-forward playing comprises the URL corresponding to each content segment of the media file with double of regular playback rate.

Step 406: The client parses the media presentation description corresponding to the 2X fast-forward playing to obtain the URL corresponding to each specific media segment, and initiates the HTTP get request to the server, so as to request for obtaining a media content segment from a URL address corresponding to the specific media segment.

Optionally, if the media presentation description obtained by the client in step 403 comprises a URL corresponding to the content segment of the media file with each multiple of regular playback rate, steps 404 and 405 do not need to be executed, and step 406 is executed directly.

Step 407: The server sends the HTTP response to the client, where the HTTP response carries the content segment of the media file corresponding to the 2X fast-forward playing.

Step 408: The client performs the 2X fast-forward playing on the media file according to the obtained content segment.

A client player parses the media content segment of 2X fast-forward playing, and plays the media content of 2X fast-forward playing.

Optionally, steps 404 to 407 may be executed for multiple times. For example, the above media file is divided into 60 segments, and then the HTTP get request is sent to the server for 60 times to request URLs corresponding to the 60 segments respectively. The server returns the URLs corresponding to the 60 segments to the client respectively, and the client obtains the 60 segments from the server according to the URLs corresponding to the 60 segments. Definitely, according to actual requirements, the client may also select partial segment content.

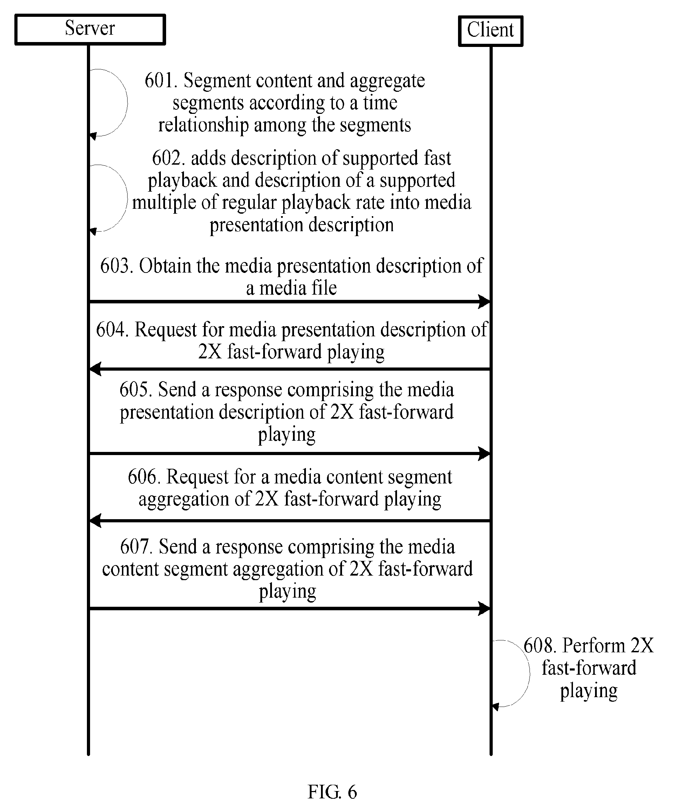

FIG. 6 is another method for implementing fast playback of a media file according to an embodiment of the present invention, where the method comprises the following steps.

Step 601: An HTTP Streaming server segments content to be fast played for a multimedia file, and aggregates segments according to a time relationship among the segments.

For each multiple of regular playback rate of fast playback, the HTTP Streaming server needs to generate a corresponding fast playback sequence in advance. The fast playback sequence is generated from a regular playback rate sequence of the media file. The generating mode is the same as that described in step 401.

Each fast playback sequence is segmented and encapsulated in the same mode as the embodiment corresponding to FIG. 4, for example, the segmentation is performed based on a 10-second time interval, and an audio and a video are segmented and encapsulated separately. In this manner, a 10-minute program is divided into 60 video segments with a regular playback rate and 60 audio segments with the regular playback rate.

The HTTP Streaming server may also aggregate a group of multiple proximate segments. For example, 6 proximate segments are aggregated as a group to obtain a segment aggregation file, and a piece of description information is added into a file header of the segment aggregation file to describe the segments in the segment set and a byte offset position of each segment.

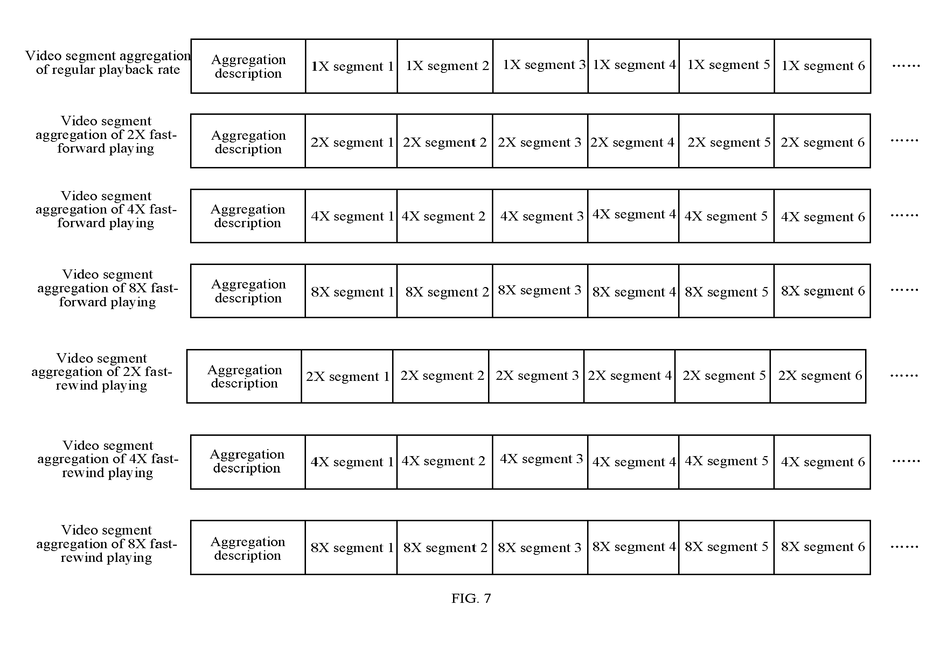

After the encapsulation and aggregation of the segment file are performed according to the above mode, 10 fast-forward playing video segment aggregations of double of regular playback rate, 10 fast-forward playing video segment aggregations of quadruple of regular-playback rate, 10 fast-forward playing video segment aggregations of octuple of regular playback rate, 10 fast-rewind playing video segment aggregations of double of regular playback rate, 10 fast-rewind playing video segment aggregations of quadruple of regular playback rate, and 10 fast-rewind playing video segment aggregations of octuple of regular playback rate are obtained, as shown in FIG. 7.

Step 602: The HTTP Streaming server adds description of supported fast playback and description of a supported multiple of regular playback rate into media presentation description of a media file.

The description of fast playback may be an ID indicating whether the fast playback is supported and an ID for supporting a fast playback type. For example, the ID for supporting a fast-forward playing type is F, and the ID for supporting a fast-rewind playing type is S.

For instance, content of the media presentation description is as follows, where an underlined part is the description of the fast-forward playing or fast-rewind playing.
Version="1"
Duration="5965419999"
Chunks="60"
Type="video",Code="MPEG-2",Bitrate=" 1250000",Width="640",Height="480",inde xURL=HTTP://www.abc.com/sample1/video1X/index.des
Type="audio",Code="MP3",Bitrate="64000",indexURL=HTTP://www.abc.com/sam ple1/audio1X/index.des
Type="fast-forward",Code="MPEG-2",Bitrate="480000",scale=2,indexURL=HTTP:/ /www.abc.com/samplel/ff2X/index.des
Type="fast-forward",Code="MPEG-2",Bitrate="240000",scale=4,indexURL=HTTP:/ /www.abc.com/samplel/ff4X/index.des
Type="fast-forward",Code="MPEG-2",Bitrate="120000",scale=8,indexURL=HTTP:/ /www.abc.com/sample1/ff8X/index.des
Type="fast-rewind",Code="MPEG-2",Bitrate="480000",scale=-2,indexURL=HTTP:/ /www.abc.com/sample1/fr2X/index.des
Type="fast-rewind",Code="MPEG-2",Bitrate="240000",scale=-4,indexURL=HTTP:/ /www.abc.com/sample1/frb4X/index.des
Type="fastr-rewind",Code="MPEG-2",Bitrate="120000",scale=-8,indexURL=HTTP: //www.abc.com/sample1/fr8X/index.des

The indexURL above is a media description link. A client may obtain description of a URL of a specific segment according to the link. Definitely, the URL description of the specific segment may also be provided directly in the same media presentation description. The fast-forward playing with double of regular playback rate is taken as an example below. Aggregation content of 10 segments of HTTP://www.abc.com/sample1/ff2X/index.des is as follows:
Version="1"
mediaID=FF2X
TotalDuration="5965419999"
Duration="600000000"
Chunks="10"
Number=1,Duration="600000000",URL=HTTP://www.abc.com/sample1/ff2X/sa_1.s a
Number=2,Duration="600000000",URL=HTTP://www.abc.com/sample1/ff2X/sa_2.s a
...
Number=9,segmentDuration="600000000",URL=HTTP://www.abc.com/sample1/ff2 X/sa_9.sa
Number=10,segmentDuration="65419999",URL=HTTP://www.abc.com/sample1/ff2 X/sa_10.sa

Segment aggregation description of each segment aggregation file may be put into a header of the segment aggregation file. Definitely, the segment aggregation description may also be given directly in media aggregation description. Taking 2x fast-forward playing as an example, if a 0-1000B part of the header is the segment aggregation description, the aggregation description of a segment aggregation is as follows:
0001000-3000000B, 10S, segment_1.3gp
3000000-6000000B, 10S, segment_2.3gp
6000000-9000000B, 10S, segment_3.3gp
0000001-3000000B, 10S, segment_4.3gp
3000000-6000000B, 10S, segment_5.3gp
6000000-9000000B, 10S, segment_6.3gp

Step 603: The client obtains the media presentation description of the media file.

The client may obtain the media presentation description of the media file through multiple modes, for example, through a web page or an EPG. The client parses the media presentation description, and may obtain a media presentation duration from the media presentation description the fast-forward playing or fast-rewind playing being supported, and the supported multiple of regular playback rate.

Optionally, the media presentation description may further comprise a URL corresponding to a content segment of the media file with each multiple of regular playback rate.

Step 604: The client selects a 2X fast-forward playing operation. When the 2X fast-forward playing operation is clicked and performed, the client obtains a URL link corresponding to the media presentation description of 2X fast-forward playing through an indexURL corresponding to the 2X fast-forward playing, and initiates an HTTP get request according to the URL link, so as to request for obtaining the media presentation description of 2X fast-forward playing from a URL indicated by the indexURL.

Step 605: The server sends an HTTP response to the client to return the media presentation description of 2X fast-forward playing to the client, where the HTTP response carries the media presentation description corresponding to the 2X fast-forward playing. The media presentation description corresponding to the 2X fast-forward playing comprises the URL corresponding to each content segment aggregation of the media file with double of regular playback rate.

Step 606: The client parses the media presentation description corresponding to the 2X fast-forward playing to obtain the URL corresponding to each specific media segment aggregation, and initiates the HTTP get request to the server, so as to request for obtaining a media content segment aggregation from a URL address corresponding to the specific media segment aggregation.

Specifically, the client obtains each segment through parsing the aggregation description in the header of the segment aggregation file.

If the client intends to obtain a specified segment quickly, the client may obtain the segment aggregation description through an HTTP partial obtaining request (indicating that the byte offset to be obtained in the header is 0-1000B), obtain the desired byte offset of the segment through parsing the segment aggregation description, and obtain the segment through the HTTP partial obtaining request (indicating the byte offset to be obtained).

Optionally, if the media presentation description obtained by the client in step 603 comprises a URL corresponding to the content segment of the media file with each multiple of regular playback rate, steps 604 and 605 do not need to be executed, and step 606 is executed directly.

Step 607: The server sends the HTTP response to the client, where the HTTP response carries the content segment aggregation of the media file corresponding to the 2X fast-forward playing.

Step 608: The client performs the 2X fast-forward playing on the media file according to the obtained content segment.

A client player parses the media content segment of 2X fast-forward playing, and plays the media content of 2X fast-forward playing.

Optionally, steps 604 to 607 may be executed for multiple times. For example, the above media file is divided into 10 segment aggregations, and then the HTTP get request needs to be sent to the server for 10 times to request URLs corresponding to the 10 segment aggregations separately. The server returns the URLs corresponding to the 10 segment aggregations to the client respectively, and the client obtains the 10 segments from the server respectively according to the URLs corresponding to the 10 segment aggregations. Definitely, according to actual requirements, the client may also select partial segment content. For example, the client may request for obtaining a second segment of a first segment aggregation only. The client obtains a byte offset of a header corresponding to the second segment of the first segment aggregation that needs to be obtained according to the segment aggregation description. The client sends an HTTP partial obtaining request to the server, where the HTTP partial obtaining request comprises the byte offset. The server returns a corresponding partial content segment aggregation to the client according to the byte offset.

Through the embodiment of the present invention, multiple file segments may be combined into a segment set file for storing. A piece of description information is added in the header of the segment aggregation file to describe the segments in the segment set and the byte offset position of each segment. In this manner, in general playing, the segment set file only needs to be obtained successively for playing, therefore reducing the HTTP requests and the load of the server. In special cases (dragging, or the beginning of file playing), the file may also be described through the header of the segment set file, so as to obtain the required byte offset of the segment. The required segment is obtained through the HTTP partial obtaining request. Through such flexible processing, the time for obtaining the file and the time delay are reduced.

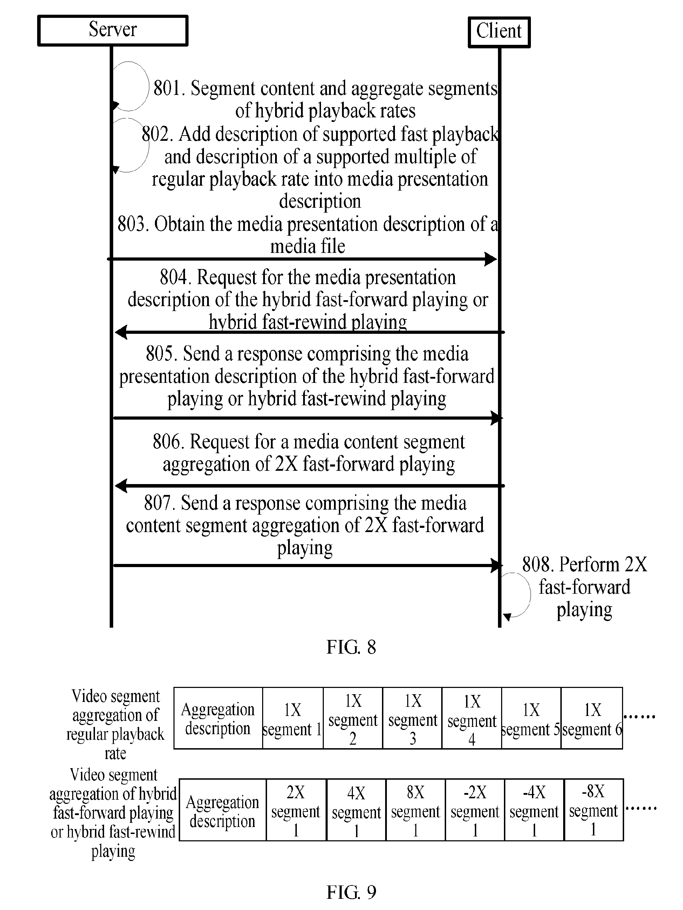

FIG. 8 shows another method for implementing fast playback of a media file according to an embodiment of the present invention, where the method comprises the following steps.

Step 801: An HTTP Streaming server segments content to be fast played for a multimedia file, and aggregates segments of hybrid playback rates.

For each multiple of regular playback rate of fast playback, the HTTP Streaming server needs to generate a corresponding fast playback sequence in advance. The fast playback sequence is generated from a regular playback rate sequence of the media file. The generating mode is the same as that described in step 401.

Each fast playback sequence is segmented and encapsulated in the same mode as the embodiment corresponding to FIG. 4, for example, the segmentation is performed based on a 10-second time interval, and an audio and a video are segmented and encapsulated separately. In this manner, a 10-minute program is divided into 60 video segments with a regular playback rate and 60 audio segments with the regular playback rate.

To reduce parsing of different rates of fast-forward playing or fast-rewind playing description caused by different multiples of regular playback rate, different rates of fast-forward playing or fast-rewind playing segments of different multiples of regular playback rate in a same time period may be aggregated. The aggregation may be performed according to the method described in step 601, so as to form a segment aggregation file. Moreover, the fast-forward playing or fast-rewind playing segments of different multiples of regular playback rate at the same time point are aggregated herein. For example, all segments at the start time with different multiples of regular playback rate are aggregated.

After the encapsulation and aggregation of the segment file are performed according to the above mode, 60 aggregations of fast-forward playing or fast-rewind playing video segments with hybrid playback rates are obtained, as shown in FIG. 9.

Step 802: The HTTP Streaming server adds description of supported fast playback and description of a supported multiple of regular playback rate into media presentation description of a media file.

The description of fast playback may be an ID indicating whether the fast playback is supported and an ID for supporting a fast playback type. For example, the ID for supporting a fast-forward playing type is F, and the ID for supporting a fast-rewind playing type is S.

For instance, content of the media presentation description is as follows, where an underlined part is the description of the fast-forward playing or fast-rewind playing.
Version="1"
Duration="5965419999"
Chunks="60"
Type="video",Code="MPEG-2",Bitrate=" 1250000",Width="640",Height="480",inde xURL=HTTP://www.abc.com/sample1/video1X/index.des
Type="audio",Code="MP3",Bitrate="64000",indexURL=HTTP://www.abc.com/sam ple1/audio1X/index.des
Type="MIX",Code="MPEG-2",Bitrate="960000",TrickMode=fast-forward,TrickMo de=fast-rewind,scale=2,scale=4,scale=8,scale=-2,scale=-4,scale=-8,indexURL=HTTP ://www.abc.com/sample1/MIX/index.des

The indexURL above is a media description link. A client may obtain description of a URL of a specific segment according to the link. Definitely, the URL description of the specific segment may also be provided directly in the same media presentation description. The content of the URL media presentation description of the specific segment with hybrid playback rates of fast playback is shown as follows:
Version="1"
mediaID=MIX
TotalDuration="5965419999"
Duration="600000000"
Chunks="60"
Number=1,Duration="100000000",URL=HTTP://www.abc.com/sample1/ff2X/sa_1.s a
Number=2,Duration="100000000",URL=HTTP://www.abc.com/sample1/ff2X/sa_2.s a
...
Number=59,segmentDuration="100000000",URL=HTTP://www.abc.com/sample1/ff 2X/sa_59.sa
Number=60,segmentDuration="65419999",URL=HTTP://www.abc.com/sample1/ff2 X/sa_60.sa

Segment aggregation description of each segment aggregation file may be put into a header of the segment aggregation file. Definitely, the segment aggregation description may also be given directly in media aggregation description. If a 0-1000B part of the header is the segment aggregation description, the aggregation description of a hybrid segment aggregation is as follows:
0001000-3000000B, 10S, 2X, segment_1.3gp
3000000-6000000B, 10S, 4X, segment_1.3gp
6000000-9000000B, 10S, 8X, segment_1.3gp
0000001-3000000B, 10S, -2X, segment_1.3gp
3000000-6000000B, 10S, -4X, segment_1.3gp
6000000-9000000B, 10S, -8X, segment_1.3gp

Step 803: The client obtains the media presentation description of the media file.

The client may obtain the media presentation description of the media file through multiple modes, for example, through a web page or an EPG. The client parses the media presentation description, and may obtain a media presentation duration from the media presentation description, the fast-forward playing or fast-rewind playing being supported, and the supported multiple of regular playback rate.

Optionally, the media presentation description may further comprise s URL corresponding to a content segment of the media file with each multiple of regular playback rate.

Step 804: The client selects a 2X fast-forward playing operation. When the 2X fast-forward playing operation is clicked and performed, the client obtains a URL link corresponding to the media presentation description of hybrid fast-forward playing or hybrid fast-rewind playing through an indexURL corresponding to the 2X fast-forward playing, and initiates an HTTP get request according to the URL link, so as to request for obtaining the media presentation description of the hybrid fast-forward playing or hybrid fast-rewind playing from a URL indicated by the indexURL.

Step 805: The server sends an HTTP response to the client to return the media presentation description of the hybrid fast-forward playing or hybrid fast-rewind playing to the client, where the HTTP response carries the media presentation description corresponding to the hybrid fast-forward playing or hybrid fast-rewind playing, and the media presentation description corresponding to the hybrid fast-forward playing or hybrid fast-rewind playing comprises the URL corresponding to each content segment aggregation of the media file with hybrid multiples of regular playback rate.

Step 806: The client parses the media presentation description corresponding to the hybrid fast-forward playing or hybrid fast-rewind playing to obtain the URL corresponding to a specific media segment aggregation of double of regular playback rate, and initiates the HTTP get request to the server, so as to request for obtaining a media content segment aggregation from a URL address corresponding to the specific media segment aggregation.

Optionally, if the media presentation description obtained by the client in step 803 comprises a URL corresponding to the content segment of the media file with each multiple of regular playback rate, steps 804 and 805 do not need to be executed, and step 806 is executed directly.

Step 807: The server sends the HTTP response to the client, where the HTTP response carries the content segment aggregation of the media file corresponding to the 2X fast-forward playing.

Step 808: The client performs the 2X fast-forward playing on the media file according to the obtained content segment.

A client player parses the media content segment of 2X fast-forward playing, and plays the media content of 2X fast-forward playing.

Optionally, steps 804 to 807 may be executed for multiple times. For example, the above media file is divided into 60 segment aggregations, and then the HTTP get request needs to be sent to the server for 60 times to request URLs corresponding to the 60 segment aggregations separately. The server returns the URLs corresponding to the 60 segment aggregations to the client respectively, and the client obtains the 60 segment aggregations from the server respectively according to the URLs corresponding to the 60 segment aggregations. Then, the client parses the aggregation description at the header of the segment aggregation file to obtain the byte offset of each segment aggregation and the multiple of regular playback rate of fast playback corresponding to each segment aggregation. The client obtains that the byte offset of double of regular playback rate of fast-forward playing segment is 0000001-3000000B through parsing the segment aggregation description, and obtains the double of regular playback rate of fast-forward playing segment through an HTTP partial obtaining request (indicating that the byte offset to be obtained is 0000001-3000000B). Definitely, according to actual requirements, the client may also select partial segment content. For example, the client may request for obtaining a second segment of a first segment aggregation only. The client obtains a byte offset of a header corresponding to the second segment of the first segment aggregation that needs to be obtained according to the segment aggregation description. The client sends an HTTP partial obtaining request to the server, where the HTTP partial obtaining request comprises the byte offset. The server returns a corresponding partial content segment aggregation to the client according to the byte offset.

Step 808: The client obtains each segment through parsing the aggregation description in the header of the segment aggregation file.

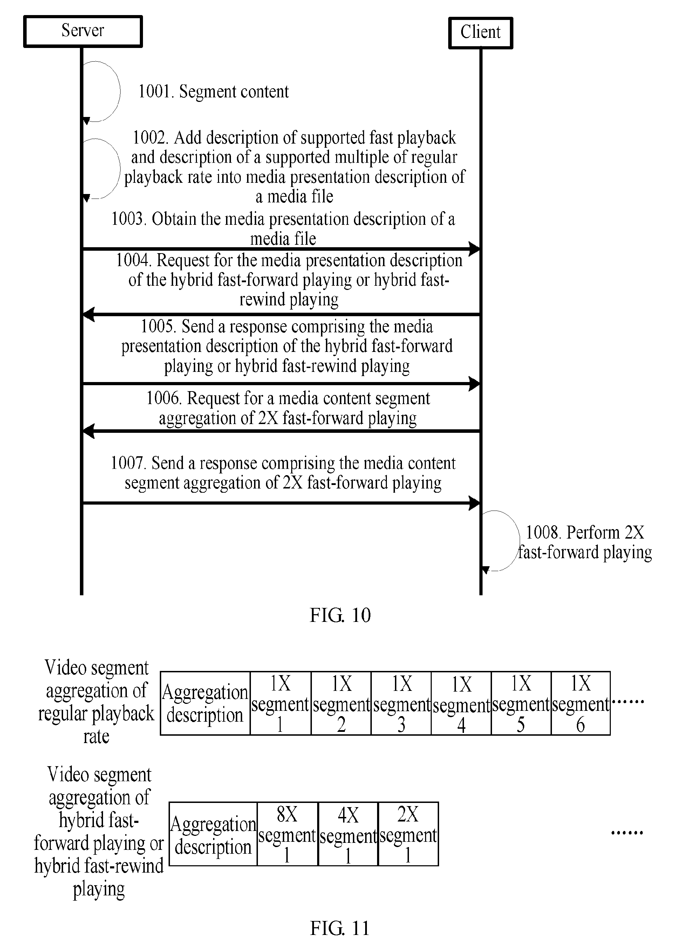

FIG. 10 shows another method for implementing fast playback of a media file according to an embodiment of the present invention, where the method comprises the following steps.

Step 1001: An HTTP Streaming server segments content to be fast played for a multimedia file.

For each multiple of regular playback rate of fast playback, the HTTP Streaming server needs to generate a corresponding fast playback sequence in advance. The fast playback sequence is generated from a regular playback rate sequence of the media file. The generating mode differs from that of step 401 in that, instead of generating a sequence corresponding to each multiple of regular playback rate through operation, only a hybrid fast playback sequence is generated. The mode for generating the sequence is described as follows.

I frames are extracted based on an interval of the minimal fast playback rate, and the minimal fast playback rate is 2X according to an application scenario of this embodiment, so as to obtain a hybrid I frame fast playback sequence of the regular playback rate. I frames are extracted from the hybrid I frame fast playback sequence for segmentation and encapsulation. Here, the segmentation is performed based on a 10-second time interval. The mode for extracting and encapsulating the I frames is described as follows.

Segments are encapsulated based on an ISO segment format. I frames required for a fast operation of a max playback rate are extracted from the hybrid fast playback sequence. According to the application scenario of this embodiment, the max playback rate is 8X, and the I frames are encapsulated into a playing segment of the max playback rate. Then, I frames required for a fast operation of a submaximal playback rate are extracted from the hybrid fast playback sequence. According to the application scenario of this embodiment, the submaximal playback rate of fast-forward playing or fast-rewind playing of this embodiment is 4X. Frames required for fast playback of a submaximal playou are eliminated, and the remaining frames are encapsulated into a fast playback segment of the submaximal playback rate. The encapsulation is performed in a similar manner until a fast playback segment of the minimal fast playback rate is encapsulated. If the fast playback rates are the same, it indicates that the I frames required are the same, and only the sequence is reverse. Therefore, the fast playback segments can be combined into one segment. An example is given below for illustration.

It is assumed that a time segment (10s) of regular playback rate comprises 16 I frames, which are {I1, 12, 13, 14, 15, 16, 17, I8, 19, 110, 111, 112, 113, 114, I15, I16} arranged in a time order. Then, the max playback rate of fast playback is octuple of regular playback rate, the I frames required are {I8, I16}, and the two frames are encapsulated into a fast playback segment of octuple of regular playback rate. The submaximal playback of fast playback is quadruple of regular playback rate, the I frames required are {I4, I8, 112, I16}, and after the I frames {I8, I16} required for the octuple of regular playback rate are eliminated, the remaining I frames are {I4, I12}, and the two frames are encapsulated into a fast playback segment of quadruple of regular playback rate. In a similar manner, the minimal playback rate of fast playback is double of regular playback rate, the I frames required are {I2, I4, I6, I8, I10, I12, I14, I16}, and after the I frames {I4, 18, 112, I16} required for the quadruple of regular playback rate are eliminated, the remaining I frames are {I2, 16, I10, I14}, and the four frames are encapsulated into a fast playback segment of double of regular playback rate.

Optionally, in the embodiment of the present invention, a hybrid aggregation may also be performed on the fast playback segments according to the method of the embodiment corresponding to FIG. 6. The fast playback segment of the max playback rate is put in the front, the segments are arranged in the order of rate levels, and the last segment of the segment aggregation is the fast playback segment of the minimal playback rate.

After the encapsulation and aggregation of the segment file are performed according to the above mode, 60 aggregations of fast-forward playing or fast-rewind playing video segments with hybrid playback rates are obtained, as shown in FIG. 11.

Step 1002: The HTTP Streaming server adds description of supported fast playback and description of a supported multiple of regular playback rate into media presentation description of a media file.

The description of fast playback may be an ID indicating whether the fast playback is supported and an ID indicating a supported fast playback type. For example, the ID for supporting a fast-forward playing type is F, and the ID for supporting a fast-rewind playing type is S.

For instance, content of the media presentation description is as follows, where an underlined part is the description of the fast-forward playing or fast-rewind playing.
Version="1"
Duration="5965419999"
Chunks="60"
Type="video",Code="MPEG-2",Bitrate=" 1250000",Width="640",Height="480",inde xURL=HTTP://www.abc.com/sample1/video1X/index.des
Type="audio",Code="MP3",Bitrate="64000",indexURL=HTTP://www.abc.com/sam ple1/audio1X/index.des
Type="MIX",Code="MPEG-2",Bitrate="960000",TrickMode=fast-forward,TrickMo de=fast-rewind,scale=2,scale=4,scale=8,scale=-2,scale=-4,scale=-8,indexURL=HTTP ://www.abc.com/sample1/MIX/index.des

The indexURL above is a media description link. A client may obtain description of a URL of a specific segment according to the link. Definitely, the URL description of the specific segment may also be provided directly in the same media presentation description. The content of the URL media presentation description of the specific segment with hybrid playback rates of fast playback is shown as follows:
Version="1"
mediaID=MIX
TotalDuration="5965419999"
Duration="600000000"
Chunks="60"
Number=1,Duration="100000000",URL=HTTP://www.abc.com/sample1/ff2X/sa_1.s a
Number=2,Duration="100000000",URL=HTTP://www.abc.com/sample1/ff2X/sa_2.s a
...
Number=59,segmentDuration="100000000",URL=HTTP://www.abc.com/sample1/ff 2X/sa_59.sa
Number=60,segmentDuration="65419999",URL=HTTP://www.abc.com/sample1/ff2 X/sa_60.sa

Segment aggregation description of each segment aggregation file may be put into a header of the segment aggregation file. Definitely, the segment aggregation description may also be given directly in media aggregation description. If a 0-1000B part of the header is the segment aggregation description, the aggregation description of a hybrid segment aggregation is as follows:
0000001-3000000B, 10S, +8X, -8X, segment_1.3gp
3000000-6000000B, 10S, +4X, -4X, segment_1.3gp
6000000-9000000B, 10S, +2X, -2X, segment_1.3gp

Step 1003: The client obtains the media presentation description of the media file.

The client may obtain the media presentation description of the media file through multiple modes, for example, through a web page or an EPG. The client parses the media presentation description, and may obtain a media presentation duration from the media presentation description, the fast-forward playing or fast-rewind playing being supported, and the supported multiple of regular playback rate.

Optionally, the media presentation description may further comprise a URL corresponding to a content segment of the media file with each multiple of regular playback rate.

Step 1004: The client selects a 2X fast-forward playing operation. When the 2X fast-forward playing operation is clicked and performed, the client obtains a URL link corresponding to the media presentation description of the hybrid fast-forward playing or hybrid fast-rewind playing through an indexURL corresponding to the 2X fast-forward playing, and initiates an HTTP get request according to the URL link, so as to request for obtaining the media presentation description of the hybrid fast-forward playing or hybrid fast-rewind playing from a URL indicated by the indexURL.

Step 1005: The server sends an HTTP response to the client to return the media presentation description of the hybrid fast-forward playing or hybrid fast-rewind playing to the client, where the HTTP response carries the media presentation description corresponding to the hybrid fast-forward playing or hybrid fast-rewind playing, and the media presentation description corresponding to the hybrid fast-forward playing or hybrid fast-rewind playing comprises the URL corresponding to each content segment aggregation of the media file with the hybrid multiples of regular playback rate.

Step 1006: The client parses the media presentation description corresponding to the hybrid fast-forward playing or hybrid fast-rewind playing to obtain the URL corresponding to each specific media segment aggregation, and initiates the HTTP get request to the server, so as to request for obtaining a media content segment aggregation from a URL address corresponding to the specific media segment aggregation.

Specifically, the client obtains the URL corresponding to each specific media segment aggregation according to the media presentation description corresponding to the hybrid fast-forward playing or hybrid fast-rewind playing, and obtains segment aggregation description through an HTTP partial obtaining request (indicating that a byte offset to be obtained in the header is 0-1000B).

The client parses the aggregation description of the header of the segment aggregation file to obtain the byte offset of each segment and a multiple of regular playback rate of fast playback corresponding to each segment.

Through parsing the segment aggregation description, the byte offset of a segment required for fast-forward playing with double of regular playback rate is obtained. A segment of fast-forward playing with double of regular playback rate actually does not comprise all I frames required for the fast-forward playing with double of regular playback rate, and instead, a complete I frame sequence of fast-forward playing with double of regular playback rate can only be formed through combining I frames required for fast-forward playing with quadruple of regular playback rate. In a similar way, for a segment of fast-forward playing with quadruple of regular playback rate, a complete I frame sequence of fast-forward playing with quadruple of regular playback rate can only be formed through combining I frames required for fast-forward playing with octuple of regular playback rate. In a similar manner, the segments required for fast-forward playing with double of regular playback rate comprise: the segment of fast-forward playing with octuple of regular playback rate, the segment of fast-forward playing with quadruple of regular playback rate, and the segment of fast-forward playing with double of regular playback rate. Therefore, the byte offset of the segment aggregation that needs to be downloaded for the fast-forward playing with double of regular playback rate is 0000001-9000000B.

The segment of fast-forward playing with octuple of regular playback rate, the segment of fast-forward playing with quadruple of regular playback rate, and the segment of fast-forward playing with double of regular playback rate are obtained through the HTTP partial obtaining request (indicating that the byte offset to be obtained is 0000001-9000000B). I frames in these segments are extracted and arranged in a time order (for fast-rewind playing, the sequence is in a reverse order), so as to organize double of regular playback rate of fast-forward playing content in a media play format.

Optionally, if the media presentation description obtained by the client in step 1003 comprises a URL corresponding to the content segment of the media file with each multiple of regular playback rate, steps 1004 and 1005 do not need to be executed, and step 1006 is executed directly.

Step 1007: The server sends the HTTP response to the client, where the HTTP response carries the content segment aggregation of the media file corresponding to the 2X fast-forward playing.

Step 1008: The client performs the 2X fast-forward playing on the media file according to the obtained content segment.

A client player parses the media content of 2X fast-forward playing, and plays the media content of 2X fast-forward playing.

Through the above method, space required for fast playback segment may be saved and storage costs of the server are reduced.

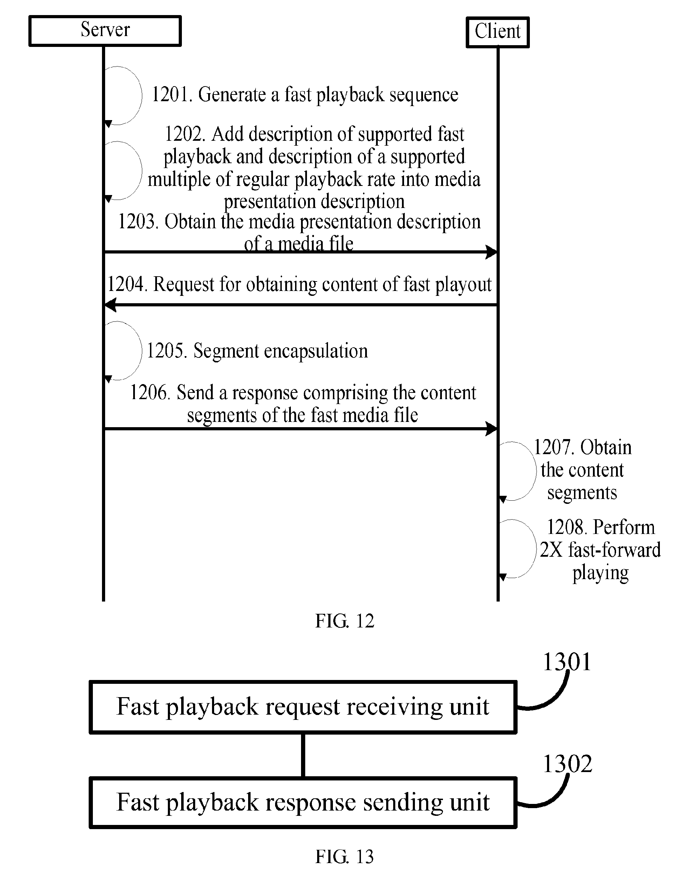

FIG. 12 shows another method for implementing fast playback of a media file according to an embodiment of the present invention, where the method comprises the following steps.

Step 1201: An HTTP Streaming server generates a fast playback sequence corresponding to content to be fast played for a multimedia file.

For each multiple of regular playback rate of fast playback, the HTTP Streaming server needs to generate a corresponding fast playback sequence in advance. The fast playback sequence is generated from a regular playback rate sequence of the media file. The generating mode herein is the same as step 401, but does not comprisee the segmentation and encapsulation in step 401.

Step 1202: The HTTP Streaming server adds description of supported fast playback and description of a supported multiple of regular playback rate into media presentation description of a media file.

The description of fast playback may be an ID indicating whether the fast playback is supported and an ID indicating a supported fast playback type. For example, the ID for supporting a fast-forward playing type is F, and the ID for supporting a fast-rewind playing type is S.

For instance, content of the media presentation description is as follows, where an underlined part is the description of the fast-forward playing or fast-rewind playing.
Version="1"
Duration="5965419999"
Chunks="60"
Type="video",Code="MPEG-2",URL="Levels({subtype})/{bitrate})/Fragments(vide o={start time})">
subType="regular",Bitrate="2500000",Width="720",Height="560"
subType="regular",Bitrate=" 1250000",Width="640",Height="480"
subType="regular",Bitrate="320000",Width="320",Height="240"
subType="fast-forward",Code="MPEG-2",Bitrate="480000",scale=2
subType="fast-forward",Code="MPEG-2",Bitrate="240000",scale=4
subType="fast-forward",Code="MPEG-2",Bitrate="120000",scale=8
subType="fast-rewind",Code="MPEG-2",Bitrate="480000",scale=-2
subType="fast-rewind",Code="MPEG-2",Bitrate="240000",scale=-4
subType="fastr-rewind" ,Code="MPEG-2" ,Bitrate="120000",scale=-8
Number=1,Duration="100000000"
Number=2,Duration=" 100000000"
...
Number=59,segmentDuration="100000000"
Number=60,segmentDuration="65419999"
Type="audio",Code="MP3",Bitrate="64000",URL="Levels({bitrate})/Fragments(vid eo= {start time})">

Step 1203: The client obtains the media presentation description of the media file.

The client may obtain the media presentation description of the media file through multiple modes, for example, through a web page or an EPG. The client parses the media presentation description, and may obtain a media presentation duration from the media presentation description, the fast-forward playing or fast-rewind playing being supported, and the supported multiple of regular playback rate.

Step 1204: The client selects a 2X fast-forward playing operation. When the 2X fast-forward playing operation is clicked and performed, description of a URL template in the media presentation description constructs a requested URL, where the URL comprises a server address and parameters of fast playback. For example, a URL of 2X fast-forward playing is HTTP://www.abc.com/samples1/serviceA/Levels(fast-forward)/Fragments(video=1200000000)? scale=2, for requesting the 2X fast-forward playing operation of a service A (identified with HTTP://www.abc.com/samples1/serviceA/, and the media presentation description can be obtained through the URL). A start time point of requested 2X playing is at 120 second.

The client initiates an HTTP get request, and initiates a request to the above constructed URL to request for obtaining content of fast playback.

Step 1205: The server receives the HTTP get request and obtains the parameters from the URL, therefore obtaining information that the fast playback type is fast-forward playing, a playback rate is double of regular playback rate, and the start time point is 120 second. The server searches a 2X fast playback sequence according to the fast playback type and the playback rate, and searches I frames in the sequence that start at 120 second within an interval of 10 seconds according to the start time point. Then, the server performs segment encapsulation according to requirements, and puts the encapsulated segments in an HTTP response.

Step 1206: The server returns the HTTP response comprising the content segments of the media file to the client.

Step 1207: The client receives the HTTP response from the server, and obtains the media content segments from an HTTP load.

Step 1208: A client player parses the media content segment of 2X fast-forward playing, and plays the media content of 2X fast-forward playing.

FIG. 13 is a schematic structure diagram of a server for implementing fast playback according to an embodiment of the present invention, where the server comprises a fast playback request receiving unit 1301 and a fast playback response sending unit 1302.

The fast playback request receiving unit 1301 is configured to receive a fast playback request sent by a client, where the fast playback request comprises a URL corresponding to content of a media file with a specified multiple of regular playback rate by the client, and the specified multiple of regular playback rate is determined by the client according to obtained media presentation description.

The fast playback response sending unit 1302 is configured to obtain content segments corresponding to the media file with the specified multiple of regular playback rate according to the URL, and send a fast playback response to the client, where the fast playback response comprises the content segments corresponding to the media file with the specified multiple of regular playback rate.

In the embodiment of the present invention, the client sends the fast playback request to the server according to a supported multiple of regular playback rate comprised in the media presentation description of the media file. The server sends the fast playback response to the client, where the fast playback response carries the content segments corresponding to the media file with the specified multiple of regular playback rate. Therefore, the client may implement the required fast playback of the online streaming service according to each content segment, and improve user experience at the same time.

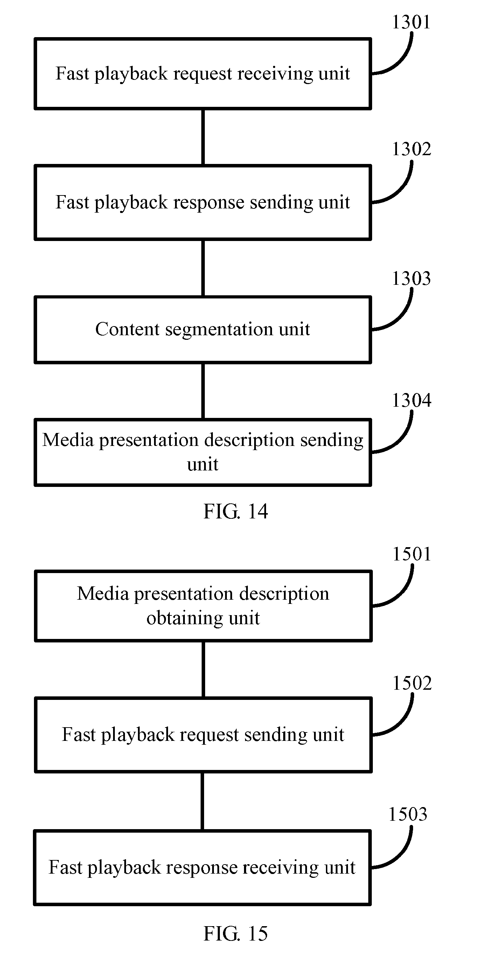

Optionally, as shown in FIG. 14, the server further comprises a content segmentation unit 1303 configured to extract corresponding I frames from a regular playback rate sequence of the media file according to the multiple of regular playback rate of fast playback, so as to generate a fast playback sequence and to encapsulate and segment the fast playback sequence according to an HTTP Streaming file format.

Optionally, as shown in FIG. 14, the server further comprises a media presentation description sending unit 1304 configured to send the media presentation description to the client, where the media presentation description comprises a fast playback type ID and a supported multiple of regular playback rate, so that the client specifies a fast playback type and a multiple of regular playback rate according to the fast playback type ID and the supported multiple of regular playback rate.

For the fast playback sequence, content segment, fast playback request, and related specific working processes involved in this embodiment, reference may be made to related contents disclosed in the embodiments with FIG. 3, FIG. 4, FIG. 6, FIG. 8, FIG. 10, and FIG. 12, and the details will not be repeated herein.

FIG. 15 is a schematic structure diagram of a terminal for implementing fast playback according to an embodiment of the present invention, where the terminal comprises a media presentation description obtaining unit 1501, a fast playback request sending unit 1502, and a fast playback response receiving unit 1503.

The media presentation description obtaining unit 1501 is configured to obtain media presentation description of a media file from a server, where the media presentation description comprises a supported multiple of regular playback rate.

The fast playback request sending unit 1502 is configured to specify a multiple of regular playback rate according to the supported multiple of regular playback rate, and send a fast playback request to the server, where the fast playback request comprises a URL corresponding to content of the media file with the specified multiple of regular playback rate.

The fast playback response receiving unit 1503 is configured to receive the fast playback response sent by the server, where the fast playback response comprises a content segment corresponding to the media file with the specified multiple of regular playback rate, and implement fast playback of the media file according to the content segment.

In the embodiment of the present invention, the client sends the fast playback request to the server according to the supported multiple of regular playback rate comprised in the media presentation description of the media file. The server sends the fast playback response to the client, where the fast playback response carries the content segments corresponding to the media file with the specified multiple of regular playback rate. Therefore, the client may implement the required fast playback of the online streaming service according to each content segment, and improve user experience at the same time.

For the fast playback sequence, content segment, fast playback request, and related specific working processes involved in this embodiment, reference may be made to related content disclosed in the embodiments with FIG. 3, FIG. 4, FIG. 6, FIG. 8, FIG. 10, and FIG. 12, and the details will not be repeated herein.

Through the description of the above implementation manner, persons skilled in the art may clearly know that the present invention may be realized by using software plus a necessary universal hardware platform, and may be definitely realized by using hardware, but under many situations, the former one is the most preferred implementation manner. Based on such understanding, the technical solutions of the present invention or parts of the technical solutions of the present invention making contributions to the prior art are substantially presented in the form of a software product. The software product is stored in a storage medium, which includes a plurality of instructions for enabling mobile equipment (such as a mobile phone, a personal computer, or a media player) to execute the methods according to the embodiments of the present invention. Here, the storage medium is, for example, a Read Only Memory (ROM) or Random Access Memory (RAM), a magnetic disk, or an optical disk.

It will be apparent to persons skilled in the art that various modifications and variations can be made to the present invention without departing from the scope and spirit of the invention. In view of the foregoing, it is intended that the present invention covers modifications and variations of this invention provided they fall within the scope of the following claims and their equivalents.

## Claims

1. A method for implementing fast playback to construct fast-forward playing or fast-rewind playing, comprising:
sending a media presentation description of a media file to a client, wherein the media presentation description comprises an Identifier (ID) which indicate the supported fast playback type, a supported multiple of regular playback rate and a Uniform Resource Locator (URL) of a content segment of the media file corresponding to supported multiple of regular playback rate of fast playback, wherein the fast playback type comprises fast-forward playing and/or fast-rewind playing;
receiving a fast playback request sent by the client, wherein the fast playback request comprises a URL corresponding to a content segment of the media file with a specified multiple of regular playback rate by the client which is determined by the client; and
obtaining the content segment corresponding to the fast playback reqeust, and sending a fast playback response to the client, wherein the fast playback response comprises the content segment corresponding to the media file with the specified multiple of regular playback rate.

2. The method according to claim 1, wherein a video code of the media file is a Moving Picture Experts Group-2 (MPEG-2) code.

3. The method according to claim 2, further comprising:
extracting I frames from a regular playback rate sequence of the media file according to a multiple of the regular playback rate of fast playback to generate a fast playback sequence; and
encapsulating and segmenting the fast playback sequence according to a Hyper Text Transport Protocol (HTTP) Streaming file format to obtain the content segment of the media file.

4. The method according to claim 3, further comprising: aggregating content segments of the media file for fast playback according to a time relationship among the content segments; or
aggregating the content segments of the media file for fast playback according to the time relationship among the content segments and multiples of regular playback rate of the content segments.

5. The method according to claim 3, wherein the extracting I frames from the regular playback rate sequence of the media file according to the multiple of regular playback rate of fast playback to generate the fast playback sequence file comprises:
storing I frames required by each multiple of regular playback rate of fast playback into a hybrid sequence;
extracting I frames required with a max playback rate from the hybrid sequence, and encapsulating the extracted I frames into a segment with the max playback rate; and
extracting I frames required with an n^{th} higher playback rate from the hybrid sequence, eliminating I frames required with a max playback rate prior to the n^{th} higher playback rate from the extracted I frames required with the n^{th} higher playback rate, and encapsulating the remaining frames into a segment of the n^{th} higher playback rate, wherein n is a natural number greater than 2.

6. The method according to claim 4, wherein the fast playback response specifically comprises:
the content segment aggregation corresponding to the media file with the specified multiple of regular playback rate.

7. The method according to claim 3,
wherein the step of obtaining the content segment further comprises:
obtaining each content segment corresponding to the media file with the specified multiple of regular playback rate according to the URL of each segment;
alternatively, if the URL corresponding to the content of the media file with the specified multiple of regular playback rate requested by the client is specifically a URL of a start segment corresponding to the content of the media file with the specified multiple of regular playback rate by the client, and
the step of obtaining the content segment further comprises:
obtaining each content segment corresponding to the media file with the specified multiple of regular playback rate according to the URL of the start segment, time of the start segment, and a time length between the segments, wherein the playing request further comprises the time of the start segment and the time length between the segments.

8. A method for implementing fast playback, comprising:
obtaining a media presentation description of a media file from a server, wherein the media presentation description comprises a supported multiple of regular playback rate, an Identifier (ID) which indicate the supported fast playback type and a Uniform Resource Locator (URL) of a content segment of the media file corresponding to supported multiple of regular playback rate of fast playback, wherein the fast playback type comprises fast-forward playing and/or fast-rewind playing;
specifying a multiple of regular playback rate according to the media presentation description, and sending a fast playback request to the server, wherein the fast playback request comprises a URL corresponding to the content segment of the media file with the specified multiple of regular playback rate; and
receiving a fast playback response sent by the server, wherein the fast playback response comprises a content segment corresponding to the media file with the specified multiple of regular playback rate, and
implementing fast playback of the media file according to the content segment.

9. The method according to claim 8, wherein a video code of the media file is a Moving Picture Experts Group-2 (MPEG-2) code.

10. The method according to claim 8, wherein the content segment corresponding to the media file with the specified multiple of regular playback rate is specifically a content segment aggregation corresponding to the media file with the specified multiple of regular playback rate; and
the step of implementing the fast playback of the media file according to the content segment comprises:
obtaining a segment aggregation description from the server, obtaining a desired byte offset of the content segment through parsing the segment aggregation description, obtaining each content segment according to the byte offset of the content segment, and implementing fast playback of the media file according to each content segment.

11. A server for implementing fast playback, comprising:
a media presentation description sending unit, configured to send a media presentation description of a media file to a client, wherein the media presentation description comprises an Identifier (ID) which indicate the supported fast playback type, a supported multiple of regular playback rate and a Uniform Resource Locator (URL) of a content segment of the media file corresponding to supported multiple of regular playback rate of fast playback, wherein the fast playback type comprises fast-forward playing and/or fast-rewind playing;
a fast playback request receiving unit, configured to receive a fast playback request sent by the client, wherein the fast playback request comprises a URL corresponding to a content segment of the media file with a specified multiple of regular playback rate by the client which is determined by the client; and
a fast playback response sending unit, configured to obtain the content segment corresponding to the fast playback request and send a fast playback response to the client, wherein the fast playback response comprises the content segment corresponding to the media file with the specified multiple of regular playback rate.

12. The server according to claim 11, further comprising:
a content segmentation unit, configured to extract I frames from a regular playback rate sequence of the media file according to a multiple of the regular playback rate of fast playback to generate a fast playback sequence, and encapsulate and segment the fast playback sequence according to a Hyper Text Transport Protocol (HTTP) Streaming file format.

13. The server according to claim 11, wherein a video code of the media file is a Moving Picture Experts Group-2 (MPEG-2) code.

14. A terminal for implementing fast playback, comprising:
a media presentation description obtaining unit, configured to obtain media presentation description of a media file from a server, wherein the media presentation description comprises a supported multiple of regular playback rate, an Identifier (ID) which indicate the supported fast playback type and a Uniform Resource Locator (URL) of a content segment of the media file corresponding to supported multiple of regular playback rate of fast playback, wherein the fast playback type comprises fast-forward playing and/or fast-rewind playing;
a fast playback request sending unit, configured to specify a multiple of regular playback rate according to the media presentation description and send a fast playback request to the server, wherein the fast playback request comprises a URL corresponding to the content segment of the media file with the specified multiple of regular playback rate; and
a fast playback response receiving unit, configured to receive a fast playback response sent by the server, wherein the fast playback response comprises the content segment corresponding to the media file with the specified multiple of regular playback rate, and implement fast playback of the media file according to the content segment.

15. The terminal according to claim 14, wherein a video code of the media file is a Moving Picture Experts Group-2 (MPEG-2) code.

16. The terminal according to claim 14, wherein the fast playback response receiving unit, specifically configured to obtain a segment aggregation description from the server, obtain a desired byte offset of the content segment through parsing the segment aggregation description, obtain each content segment according to the byte offset of the content segment, and implement fast playback of the media file according to each content segment, wherein the content segment corresponding to the media file with the specified multiple of regular playback rate is specifically a content segment aggregation corresponding to the media file with the specified multiple of regular playback rate.
